# EUROPÄISCHE PATENTSCHRIFT

(11) **EP 2 872 975 B1**
(45) Veröffentlichungstag und Bekanntmachung des Hinweises auf die Patenterteilung: **04.09.2019**
(21) Anmeldenummer: 13732830.8
(22) Anmeldetag: 24.06.2013
(51) Int. Cl.: G06F 3/042

(54) **BESCHICHTETE KOMPONENTE**
COATED COMPONENT
COMPOSANT REVÊTU

(30) Priorität: 11.07.2012 DE 102012013685
(43) Veröffentlichungstag der Anmeldung: 20.05.2015
(73) Patentinhaber: Oerlikon Surface Solutions AG, Pfäffikon, 8808 Pfäffikon (CH)
(72) Erfinder: KECKES, Antal, 78244 Gottmadingen (DE)
(74) Vertreter: Kempkens, Anke
(86) Internationale Anmeldenummer: PCT/EP2013/001854
(87) Internationale Veröffentlichungsnummer: WO 2014/008985

(56) Entgegenhaltungen:
- EP-A1- 2 383 364
- DE-A1-102009 025 950
- US-A1- 2012 133 583
- US-A1- 2012 162 075

## Beschreibung

Die vorliegende Erfindung bezieht sich auf ein optisches Fingernavigationsmodul (OFN). Solche Sensoren werden beispielsweise bei Mobiltelefonen eingesetzt. Dabei funktioniert gemäss einer Ausführungsform ein solcher Sensor im Wesentlichen als Infrarot-Videokamera die die Bewegung einer Fingerspitze aufzeichnet und dieser als Bewegung des Cursors umsetzt. In der DE102009043800A1 ist ein solches Modul beschrieben, welches darauf basiert, das Licht einer IR-Lichtquelle an einem Finger zu reflektieren und in Reflektion aufzunehmen. Aufeinander folgende digitale Bilder werden miteinander verglichen, um Bewegungsinformation zu berechnen.

In US2012133583 wird eine optisches Fingernavigationsmodul beschrieben, welches einen Ring in Chrom-Look um den Sensorbereich aufweist.

Die entsprechenden Sensoren werden in vielen Fällen mit einer Polycarbonat-Deckplatte abgedeckt und vor der Umgebung geschützt. Möchte man in diesem Zusammenhang zumindest Teile der entsprechenden Oberfläche ein metallisches Finish geben, um z.B. Tag-Nacht Design zu realisieren, so ergibt sich die Schwierigkeit, dass metallische Schichten bereits bei einer geringen Dicke nicht mehr IR transparent sind. Gemäss Stand der Technik werden daher diejenigen Bereiche, durch welche die IR-Strahlung hindurchtreten sollte, vor der Beschichtung maskiert.

Typischerweise werden derartige Komponenten so hergestellt, dass zunächst die Komponente wie oben beschrieben maskiert wird. Anschliessend erfolgt das Aufbringen einer dünnen Al-Schicht, beispielsweise mittels physikalischer Bedampfungstechnik im Vakuum. Nach dem Bedampfen wird die Maske entfernt zum Schutz der Oberfläche, d.h. unbeschichteten und auch der mit Aluminium beschichteten Oberflächenbereiche der Komponente wird zunächst ein klarer Zweikomponentenlack (2K-Lack) aufgebracht. Ein solcher 2K-Lack ist im Wesentlichen eine Mischung aus Härter und Stammlack. Kurz vor dem Aufbringen werden diese beiden Komponenten gemischt. Dabei muss die Mischung einen hohen Prozentsatz von Lösungsmittel (40Vol% - 50Vol%) enthalten um die Viskosität genügend herabzusetzen. Nachteilig dabei ist, dass diese Lösungsmittel das darunter liegende Substrat angreifen können. Zwar soll der Komponente einen Chrom Look aufweisen. Bisher muss jedoch auf Aluminium ausgewichen werden der sich der 2K-Lack nicht auf eine Chromoberfläche applizieren lässt. Chrom-look wird gemäss Stand der Technik dadurch erreicht, dass vor dem Aufbringen des klaren 2K-Lackes und manchmal vor dem Entfernen der Maske eine Haftschicht 2K-Lack auf die Al-Oberfläche aufgebracht wird. Eine zweite 2K-Klarlackschicht wird aufgebracht, um die Abriebfestigkeit zur erhöhen. Nachteilig ist, dass es sich hierbei um ein aufwändiges 3 Schichtsystem mit entsprechend hohen Ausschusszahlen und Herstellungskosten handelt.

Der vorliegenden Erfindung liegt die Aufgabe zugrunde, die oben genannten Nachteile zu überwinden oder zumindest teilweise abzuschwächen.

Erfindungsgemäss wird die Aufgabe dadurch gelöst, dass anstelle des 2K-Lackes ein UVhärtender Lack mit hohem Festkörperanteil eingesetzt wird. Dadurch wird ermöglicht, dass korrosionsbeständiges Chrom zum Einsatz kommt und nur eine Schicht UV Schutzlack für die hohe Dauerbeanspruchung aufgebracht werden muß. Die Herstellungskosten werden dadurch signifikant reduziert und die Kosten gesenkt. Der UV-Lack hat des Weiteren den Vorteil, dass er im Vergleich zum 2K-Lack einen wesentlich geringeren Prozentsatz an Lösungsmittel enthält und somit auch das darunterliegende Substrat sowie die Umwelt geschont wird.

Die Erfindung wird definiert durch die angehängten Ansprüche. Ausführungen welche nicht in den Geltungsbereich der Ansprüche fallen beschreiben keinen Teil der Erfindung.

Die Erfindung wird nun beispielhaft anhand einem Ausführungsbeispiel im Detail erläutert.

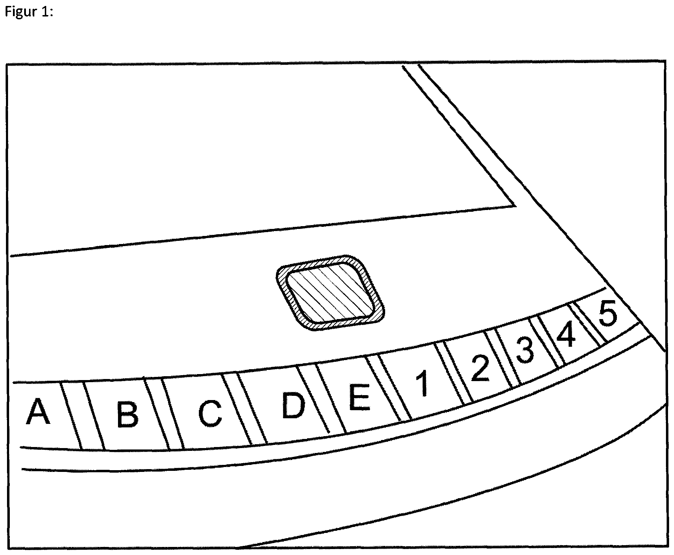

Figur 1 zeigt einen Ausschnitt eines Mobiltelefones mit optischem Fingernavigationsmodul (OFN) im zentralen Bereich.

Das in der Figur 1 gezeigte OFM umfasst einen zentralen Bereich und einen Rand. Der zentrale Bereich ist schwarz, der Rand soll bei Tageslicht einen Chrom Look aufweisen und bei ungenügendem Umgebungslicht von hinten beleuchtet sein. Der Rand muss daher zumindest teilweise für sichtbares Licht transparent sein. Der zentrale Bereich muss, um die Funktion des OFN zu ermöglichen, für Infrarote Strahlung transparent sein. Als infrarote Strahlung im Sinne der vorliegenden Erfindung gilt für Strahlung mit einer Wellenlänge grösser als 780nm und vorzugsweise kleiner als 1400nm.

Für den zentralen Bereich wird schwarz eingefärbtes Polycarbonat verwendet, für den Rand wird transparentes Polycarbonat verwendet. Diese können zusammen abgespritzt werden. Nach dem Abspritzen wird die Komponente in einem Ultraschallbad gereinigt und anschliessend getrocknet. Der zentrale Bereich wird nun beispielsweise mittels Abkleben zugedeckt, d.h. maskiert, da dieser nicht mit einer Metallschicht beschichtet werden soll.

Die Maskierung lässt lediglich den Rand frei.

Die Komponente wird anschliessend in einer Beschichtungsanlage mit Chrom beschichtet. Geeignet ist zum Beispiel die physikalische Abscheidung aus der Gasphase (PVD), wie zum Beispiel Sputtern oder Lichtbogenverdampfen. Da Magnetronsputtern bei relativ geringen Temperaturen (unter 150°C, teilweise auch unter 100°C vollzogen werden kann) ist dieses unter Vakuum durchgeführte Verfahren besonders geeignet. Entsprechend sollte das Maskierungsmaterial vakuumtauglich sein.

Die aufgebrachte Chromschicht sollte nicht zu dick sein, um genügend Transparenz für sichtbares Licht für die Nachtbeleuchtung aufzuweisen. Die Chromschicht sollte aber auch nicht zu dünn sein, um bei Tageslicht den gewünschten Chrom Look aufzuweisen. Als bevorzugt hat sich eine Chromschichtdicke von ca. 20nm herausgestellt. Diese wird mit dem oben beschriebenen Verfahren aufgebracht.

Nach der PVD Beschichtung erfolgt das Entfernen der Maske. Dies kann beispielsweise mittels Lösemittel, z.B. Aceton, geschehen. Nach Entfernen der Maske wird die Oberfläche abgeblasen und deionisiert. Anschliessend erfolgt die Auftragung einer ca. 20µm dicken UV-Lackschicht, dem sich eine Trocknung beispielsweise mittels IR-Wärmestrahlung und eine UV-Härtung anschliesst. Die Dauer für die UV - Härtung liegt in der Grössenordnung einer Minute.

Aufgrund des UV - Lackes ist sowohl das im zentralen Bereich darunter liegende schwarze Substrat sowie die im Randbereich darunter liegende dünne Chromschicht gegen Korrosion geschützt. Ausserdem ist die Kratzfestigkeit erhöht und die Verschmutzungstendenz hinsichtlich der Fingerabdrücke ist erniedrigt.

Die so entstandene Komponente wird nun als Deckglas für einen Infrarotsensor eingesetzt.

Es wurde ein Infrarotsensor und insbesondere optisches Fingernavigationsmodul mit einer als Deckglas für den Sensor eingesetzten Komponente offenbart, wobei die Komponente einem Sensorbereich und einem transparenten Bereich umfasst, wobei der transparente Bereich eine dünne, zumindest teilweise für sichtbares Licht transparente zumindest eine Schicht umfassendes Schichtsystem umfasst und die zumindest eine Schicht eine Metallschicht, eine Halbleiterschicht und/oder eine Kombination mehrerer Metalle und/oder mehrerer Halbleiter ist oder eine Kombination zumindest eines Metalles mit zumindest einem Halbleiter umfasst dadurch gekennzeichnet, dass sowohl der Sensorbereich als auch der transparente Bereich mit einer UV-härtenden gehärteten Lackschicht bedeckt ist.

Der Infrarotsensor kann dadurch gekennzeichnet sein, dass die zumindest eine Schicht Chrom umfasst und bevorzugt eine Chromschicht ist, wobei die eine Schicht eine Dicke von 20nm aufweist.

Der Infrarotsensor kann dadurch gekennzeichnet sein, dass die eine Schicht eine direkt auf dem Substrat aufliegende Haftschicht und eine sich daran anschliessende Funktionsschicht aufweist.

## Patentansprüche

1. Infrarotsensor insbesondere optisches Fingernavigationsmodul mit einer als Deckglas für den Sensor eingesetzten Komponente aus Polycarbonat, welche als eine Einheit hergestellt ist, wobei die Komponente einen Sensorbereich und einen transparenten Bereich umfasst, **dadurch gekennzeichnet dass** der transparente Bereich eine dünne, teilweise für sichtbares Licht transparente zumindest eine aus der Gasphase abgeschiedenen physikalischen Schicht, auch PVD Beschichtung genannt, umfasst und die zumindest eine Schicht eine Metallschicht, die zumindest eine Schicht aus Chrom umfasst, die eine Schichtdicke von ca. 20 nm aufweist, eine Halbleiterschicht und/oder eine Schicht aus einer Kombination mehrerer Metalle und/oder mehrerer Halbleiter ist oder eine Schicht aus einer Kombination zumindest eines Metalls mit zumindest einem Halbleiter umfasst, wobei der Sensorbereich eingefärbt ist aber gleichzeitig für Infrarote Strahlung transparent und sowohl der Sensorbereich als auch der für sichtbares Licht transparente Bereich mit einer UV-härtenden gehärteten Lackschicht bedeckt ist.

2. Infrarotsensor nach dem Anspruch 1, **dadurch gekennzeichnet, dass** die eine Schicht eine direkt auf dem Substrat der Komponente aufliegende Haftschicht und eine sich daran anschließende Funktionsschicht aufweist.

## Claims

1. Infrared sensor, in particular an optical finger navigation module, with a component made of polycarbonate and used as a cover glass for the sensor, which component has been produced as a unit, wherein the component comprises a sensor region and a transparent region, **characterized in that** the transparent region comprises a thin layer which is partially transparent for visible light and which is at least one physical layer deposited from the gas phase, also called PVD coating, and the at least one layer is a metal layer comprising at least one chromium layer which has a thickness of 20 nm, a semiconductor layer and/or a layer made of a combination of a plurality of metals and/or a plurality of semiconductors or comprises a layer made of a combination of at least one metal with at least one semiconductor, wherein the sensor region is colored, but simultaneously transparent for infrared radiation and both the sensor region and the region which is transparent for visible light are covered with a UV-hardening hardened lacquer layer.

2. Infrared sensor according to claim 1, **characterized in that** the one layer has an adhesive layer lying directly on the substrate of the component and a following functional layer.

## Revendications

1. Capteur infrarouge, en particulier un module de navigation optique à doigts ayant un composant en polycarbonate qui est utilisé comme verre de recouvrement pour le capteur, ledit composant étant fabriqué sous forme d'une unité, le composant comprenant une zone de détection et une zone transparente, **caractérisé en ce que** la zone transparente comprend une couche mince qui est partiellement transparente à la lumière visible et qui est du moins une couche physique déposée à partir de la phase gazeuse, également appelé revêtement PVD, et la du moins une couche est une couche métallique qui comprend du moins une couche de chrome ayant une épaisseur d'environ 20 nm, une couche semiconductrice et/ou une couche consistant d'une combinaison de plusieurs métaux et/ou plusieurs semi-conducteurs ou comprend une couche consistant d'une combinaison d'au moins un métal avec du moins un semiconducteur, la zone de détection étant colorée, mais simultanément transparente aux rayons infrarouges et la zone de détection ainsi que la zone transparente à la lumière visible sont couvertes d'une couche de vernis durci, durcissant aux UV.

2. Capteur infrarouge selon la revendication 1, **caractérisé en ce que** l'une couche a une couche adhesive reposant directement sur le substrat du composant et une couche fonctionnelle qui s'y raccorde.
